# EUROPÄISCHE PATENTANMELDUNG

(11) **EP 1 043 571 A1**
(43) Veröffentlichungstag der Anmeldung: **11.10.2000**
(21) Anmeldenummer: 00107461.6
(22) Anmeldetag: 06.04.2000
(51) Int. Cl.: G01D 5/249, G01D 5/347

(54) **Absolutes Positionsmesssystem**

(30) Priorität: 10.04.1999 DE 19916217
(71) Anmelder: TR Electronic GmbH, 78647 Trossingen (DE)
(72) Erfinder: Kipping, Uwe Dr., 78647 Trossingen (DE)
(74) Vertreter: Schmitt, Hans, Dipl.-Ing.

(57) **Zusammenfassung**

Die Erfindung bezieht sich auf ein absolutes Positionsmeßsystem zur Bestimmung der Lage zweier relativ zueinander beweglicher Objekte mit einem am ersten Objekt angeordneten Codeträger, einem am zweiten Objekt angeordneten Sensorsystem zur Abtastung des Codeträgers und einer Auswerteeinheit, die aus den Signalen des Sensorsystems die Lage des ersten Objekts bezüglich des zweiten Objekts ermittelt. Hierbei ist vorgesehen, daß der Codeträger mindestens zwei Spuren (1) und (2) aufweist, deren Striche bezüglich der Meßrichtung (5) Winkelneigungen (α₁) und (α₂) besitzen, die jeweils in codierter Form die Absolutposition enthalten, wobei die Winkelneigungen (α₁) und (α₂) bezüglich der Meßrichtung (5) entgegengesetzten Richtungssinn (R₁) und (R₂) aufweisen, und daß der Erfassungsbereich des Sensorarrays (6) eine von der Meßrichtung (5) und den Winkelneigungen (α₁) und (α₂) abweichende Winkelneigung (γ) besitzt.

## Beschreibung

Die Erfindung betrifft ein absolutes Positionsmeßsystem zur Bestimmung der Lage zweier relativ zueinander beweglicher Objekte gemäß dem Oberbegriff des Patentanspruchs 1 und findet bei Längen- und Winkelmeßsystemen Anwendung.

Aus der DE 2952106 A1 ist ein zweispuriges Positionsmeßsystem bekannt, welches eine inkrementale Spur und eine Spur nichtperiodischer Struktur in Form von Gruppen von Markierungsstrichen aufweist. Die Gruppen von Markierungsstrichen mit unregelmäßiger Strichverteilung dienen als Referenzmarken zur Bestimmung einer definierten Lage zwischen den beiden relativ zueinander beweglichen Objekten. Der Neigungswinkel zwischen den Strichen der beiden Spuren ist gleich und beträgt 90° zur Meßrichtung. Durch die Referenzmarken wird die Meßgenauigkeit und die Auflösung des Meßsystems nicht erhöht.

Nachteil von inkrementalen Meßsystemen ist, daß sich bei Maßstabsfehlern der Meßfehler linear fortsetzt und erst bei der nächsten Referenzmarke korrigiert werden kann. Führungsrichtung und Abtastrichtung müssen sehr genau sein. Die Meßgenauigkeit hängt von der Gravur der Skala sowie von der Vergrößerung des optischen Systems ab.

Herkömmliche gray- oder binärcodierte Absolutmeßsysteme sind in der Dynamik durch die maximale Abtastfrequenz und in der Auflösung durch die Teilung der niederwertigsten Bitspur begrenzt. Außerdem erfordern diese Systeme hohen Justageaufwand, da Justagefehler nicht über das Meßsignal korrigierbar sind.

In EP 0 660 085 wird ein optisches Längenmeßverfahren mit codiertem Absolutmaßstab beschrieben, bei dem eine codierte Spur, welche sich aus parallel nebeneinander angeordneten codierten Strichen zusammensetzt, deren Strichneigung unterschiedlich zu Meß- und Abtastrichtung ist, durch ein Sensorarray abgetastet wird. Dieses System erlaubt eine hohe Auflösung und Dynamik sowie die Korrektur von Justagefehlern über das Meßsignal, Nachteilig bei diesem System ist, daß bei Störungen des Meßsignals innerhalb der codierten Spur durch starke Verschmutzungen etc. bei nicht ausreichender Coderedundanz die Codeinformation und damit der Positionswert nicht ermittelbar ist. Desweiteren kann mittels nur einer codierten Spur die Winkellage zwischen Meß- und Abtastrichtung nicht direkt aus dem Meßsignal gewonnen werden, sofern nicht eine Ausgestaltung mittels zusätzlichen spiegelbildlich angeordneten Spuren mit nichtperiodischer Strichstruktur lt. Patentanspruch 6 benutzt wird.

In DE 196 33 337 wird ein Meßsystem beschrieben, welches mindestens zwei in einer Meßebene verlaufende Spuren mit codierter Absolutpositionsinformation enthalten. Im Gegensatz zur erfindungsgemäßen Aufgabe dienen diese codierten Meßinformationen zur Codierung jeweils unterschiedlicher Meßrichtungen.

Der Erfindung liegt die Aufgabe zugrunde, ein absolutes Positionsmeßsystem zur Bestimmung der Längen- bzw. Winkelposition zu schaffen, welches eine hohe Dynamik und Auflösung aufweist, mit dem Fehler des Meßsystems erkannt werden und das eine vereinfachte Konstruktion und Montage bei hoher Meßgenauigkeit gewährleistet.

Die Aufgabe wird erfindungsgemäß mit einem absoluten Positionsmeßsystem zur Bestimmung der Lage zweier relativ zueinander beweglicher Objekte mit den Merkmalen nach dem Patentanspruch 1 gelöst.

Dabei ist am ersten Objekt eine Strichstruktur aus mindestens zwei in Meßrichtung liegenden Spuren angeordnet, wobei die Striche innerhalb einer Spur zueinander parallel liegen und gleiche Winkelneigung bezüglich der Meßrichtung aufweisen. Die Spuren besitzen eine nichtperiodische Strichstruktur der eine definierte Codierung der Ortslage zugrundeliegt. Die Spuren unterscheiden sich im Richtungssinn der Striche innerhalb der Spuren bezüglich der Meßrichtung. Der Neigungswinkel der Striche dieser Spuren sollte in Abhängigkeit von der geforderten Dynamik und Auflösung im Bereich von 5°-40° liegen. Am zweiten Objekt ist ein Sensorarray mit einer linearen Matrix von Sensorelementen angeordnet und mit einer Auswerteelektronik ausgestattet.

Die Abtastrichtung des Sensorarrays weist eine von den Neigungswinkeln der Striche der Spuren und von der Meßrichtung abweichende Winkelneigung auf. Die Meßwerterfassung durch das Sensorarray erfolgt derart, daß die Analogwerte der Auswerteeinrichtung in Form eines Feldes von Flankenpositionswerten zur Verfügung gestellt werden. Dazu stellt jeweils ein Element des Sensorarrays den Mittelwert der von ihm ermittelten Helligkeitsverteilung über das Element zur Verfügung. Aus der Folge all dieser Flankenpositionswerte des gesamten Sensorarrays wird die exakte Lage des Sensorarrays zur nichtperiodischen Strichstruktur bestimmt, wodurch die erzielbare Auflösung unterhalb der Teilung des Sensorarrays liegt, d.h. der erzielbare Meßschritt ist kleiner als diese Teilung.

Erfindungsgemäß können auch weitere zueinander parallele Spuren am ersten Objekt angeordnet sein, wobei die Striche innerhalb einer Spur parallel zueinander liegen und gleiche Winkelneigungen haben, die Striche unterschiedlicher Spuren aber unterschiedliche Winkelneigungen aufweisen können.

Durch die Ergänzung der codierten Spuren durch Spuren mit Strichen parallel zur Meßrichtung wird eine Hilfsmöglichkeit zur Justierung des Meßsystems und zur Bestimmung des Abbildungsmaßstabs geschaffen. Die Anordnung dieser Spuren neben den Spuren mit nichtperiodischer Struktur, deren Striche eine Winkelneigung zur Meßrichtung aufweisen, gewährleistet eine hohe Meßgenauigkeit und die Möglichkeit einer Fehlerkompensation bei der Absolutpositionsbestimmung.

Durch die Hinzunahme zumindest einer weiteren Spur mit einer periodischen Strichstruktur, bei der der Neigungswinkel der Striche bezüglich der Meßrichtung größer ist als der Neigungswinkel der Striche der Spuren mit nichtperiodischer Strichstruktur und die Abtastrichtung eine von dem Neigungswinkel der Striche dieser Spur abweichende Winkelneigung aufweist, ist eine Erhöhung der Auflösung erreichbar, da eine geringe Wegänderung in Meßrichtung eine große Änderung der Helligkeitsverteilung in Abtastrichtung bewirkt. Damit wird eine höhere Auflösung als bei herkömmlichen Längenmeßsystemen erreicht. Der Neigungswinkel der Striche diese Spuren sollte in Abhängigkeit von der geforderten Auflösung zwischen 70° und 87° betragen.

Erfindungsgemäß können auch zwei Spuren mit periodischer Strichstruktur längs der Meßrichtung zueinander spiegelbildlich angeordnet sein. Damit wird gewährleistet, daß Abweichungen von der Neigung des Sensorarrays bezüglich der Meßrichtung (vorzugsweise 90°) erkannt werden, denn jede Winkelabweichung des Sensorarrays bewirkt eine unterschiedliche Abbildung der Linienabstände dieser Spuren auf dem Sensorarray.

Die Anordnung eines Abtastgitters, welches parallel zur Abtastrichtung im Erfassungsbereich des Sensorarrays über bzw. unter dem Strichkodeträger angeordnet wird und dessen Teilung identisch mit der Teilung der Spuren mit periodischer Strichstruktur ist, gestattet die Nutzung von Sensorarrays, deren Sensorelementebreite quer zur Abtastrichtung nicht durch die Teilung der Spur mit periodischer Strichstruktur begrenzt wird. Dies erlaubt die Nutzung großer Sensorflächen, die eine höhere Unempfindlichkeit gegenüber Verschmutzungen etc. besitzen und die Verringerung der notwendigen Lichtleistung gestatten.

Durch eine mit dem Sensortakt des Sensorarrays synchronisierten Lichtsteuerung kann eine hohe Dynamik des Meßsystems erreicht werden, indem die Lichtquelle nur einen Teil der Zykluszeit des Sensorarrays eingeschaltet und den verbleibenden Teil ausgeschaltet wird. Setzt man voraus, daß kein Fremdlicht auf die Abtasteinheit einfällt, erfolgt ein Abbild der Strichstruktur demzufolge nur in dem Zeitrahmen, in dem die Lichtquelle eingeschaltet ist. Somit ist die durch Verwischungserscheinungen begrenzte maximale Bildbewegungsgeschwindigkeit innerhalb der Spuren mit zur Meßrichtung geneigten Strichen unabhängig von der Zykluszeit des Sensorarrays, d.h. die Dynamik des Meßsystems kann über die Lichteinschaltdauer vorgegeben werden.

Erfindungsgemäß kann die Strichstruktur auch durch mehrere Sensorarrays abgetastet werden. Die Aufteilung in unterschiedliche Abtastbereiche gestattet zum einen eine parallele Abtastung getrennter Spuren - z. B. ein Sensorarray zur Abtastung der Spuren mit nichtperiodischer Strichstruktur und ein weiteres zur Abtastung der Spuren mit periodischer Strichstruktur -, wodurch Sensorarrays mit geringerer Sensorelementeanzahl genutzt werden können, die eine kleinere Zykluszeit gestatten, und zum anderen die mehrfache Abtastung der Strichstruktur, womit durch höhere Redundanz eine höhere Sicherheit der Positionsbestimmung erreicht werden kann.

Eine weitere Ausgestaltungsform besteht darin, das bisher beschriebene Absolutmeßsystem mit einem inkrementalen Meßsystem zu kombinieren. Dies gestattet einerseits die Gestaltung eines herkömmlichen inkrementalen Meßsystems mit einer permanent zur Verfügung stehenden Referenzspur, andererseits die Gestaltung eines Absolutmeßsystems, welches eine hohe Auflösung durch die Auswertung der Inkrementalspur erreicht.

Die Erfindung wird nachfolgend anhand von fünf Ausführungsbeispielen für absolute Längen- und Winkelmeßsysteme näher erläutert.

Es zeigen:
- Fig. 1: den Aufbau eines ersten Längenmeßsystems,
- Fig. 2: den Strichcode des Längenmeßsystems nach Figur 1,
- Fig. 3: einen Ausschnitt des Strichcodes nach Figur 2,
- Fig. 4: den Aufbau eines weiteren Längenmeßsystems,
- Fig. 5: den Strichcode des Längenmeßsystems nach Figur 4,
- Fig. 6: einen Ausschnitt des Strichcodes nach Figur 5,
- Fig. 7: den Aufbau eines Winkelmeßsystems,
- Fig. 8: den Strichcode des Winkelmeßsystems nach Figur 7,
- Fig. 9: einen Ausschnitt des Strichcodes nach Figur 8,
- Fig. 10: den Aufbau eines Längenmeßsystems mit Abtastgitter,
- Fig. 11: den Strichcode des Winkelmeßsystems nach Figur 10,
- Fig. 12: einen Ausschnitt des Strichcodes nach Figur 11,
- Fig. 13: den Aufbau eines Längenmeßsystems mit mehreren Sensorarrays,
- Fig. 14: den Aufbau eines Absolut-Längenmeßsystems als Kombination mit inkrementalen Meßsystem,

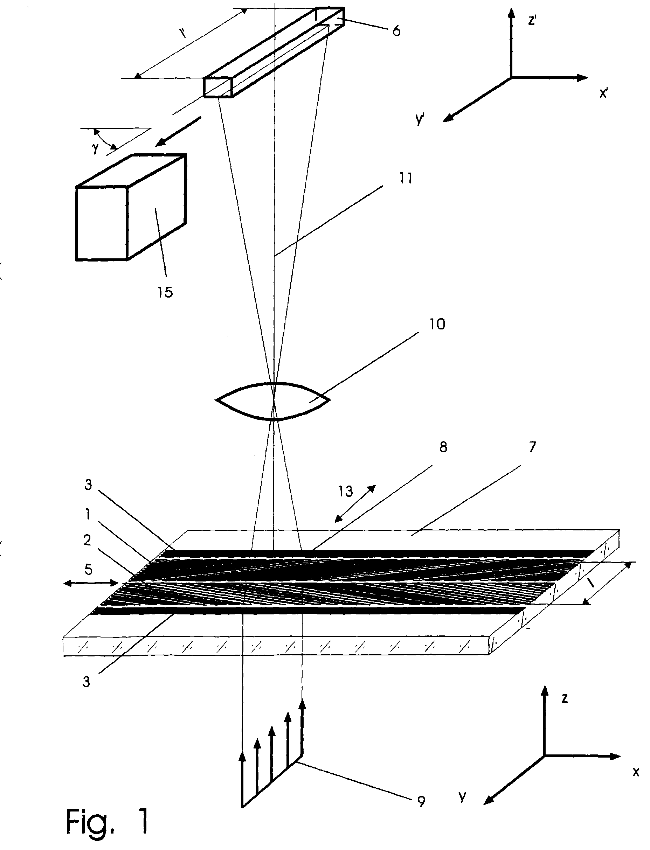

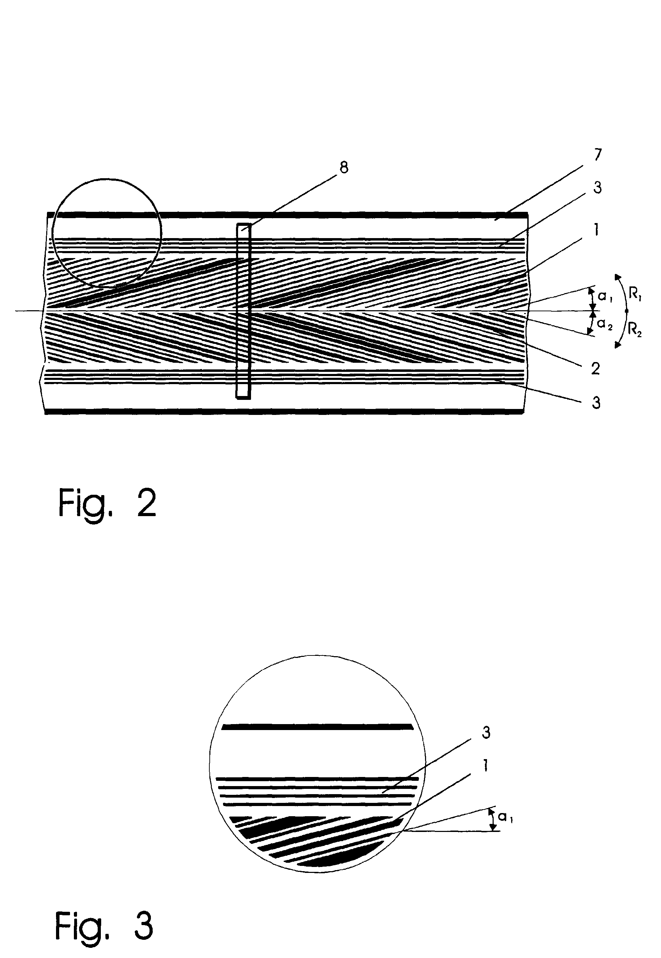

Figur 1 zeigt ein absolutes Längenmeßsystem, bei dem die in Figur 2 und Figur 3 dargestellte, mittels einer Lichtquelle 9 beleuchtete Strichstruktur 1,2,3 des Strichcodeträgers 7 über ein optisches System 10 abtastet wird. Der Strichcodeträger 7 ist als lichtdurchlässiges Codelineal ausgeführt, wobei der lichtundurchlässige Strichcode 1,2,3 auf dessen Oberfläche aufgetragen ist. Die Meßwerterfassung erfolgt über eine CCD-Zeile als Sensorarray 6. Die Analogwerte des Sensorarrays 6 werden einer Auswerteeinrichtung 15 in Form von Flankenpositionswerten als Positionsinformationen bereitgestellt. Zur Erhöhung der Auflösung kann hierbei zusätzlich ein Interpolationsverfahren angewendet werden. Die Anordnung des Sensorarrays 6 erfolgt im rechten Winkel γ zur Meßrichtung 5. Die optische Achse 11 liegt senkrecht zum Strichcodeträger 7 und mittig zu den Spuren 1,2,3.

Der Strichcodeträger 7 weist vier Spuren auf. Die Striche der beiden mittleren Spuren 1 und 2 besitzen eine nichtperiodische Codestruktur parallel zueinander angeordneter Striche, gekennzeichnet durch einen flachen Anstiegswinkel α₁ und α₂ der Striche bezüglich der Meßrichtung 5, wobei sich diese Spuren im Richtungssinn R₁ und R₂ der Striche innerhalb der Spuren bezüglich der Meßrichtung unterscheiden. Der Anstiegswinkel α₁ und α₂ ist hierbei gleich groß, so daß die Winkelneigung spiegelbildlich zur Meßrichtung gestaltet ist. Neben diesen beiden Spuren bildet jeweils eine Spur 3 mit Strichenparallel zur Meßrichtung den Abschluß der Gesamtstruktur.

Die Auswertung der Strichstrukturen erlaubt sowohl die Unterstützung der Justage als auch die Absolutpositionsangabe mit Fehlerkorrektur. Die Absolutposition ergibt sich aus von den beiden Spuren mit nichtperiodischer Strichstruktur codierten größendefinierten Wegsegmenten, wobei auch bei sehr großen Positioniergeschwindigkeiten die Wegsegmente eindeutig erfaßbar sind.

Bei Auswertung des Strichcodes zur Bestimmung der Absolutposition und Unterstützung der Justage können Auswirkungen von Justageabweichungen des Meßsystems und Fertigungstoleranzen der Strichstruktur des Strichcodeträgers 7 durch Mittelung über die Anzahl der Flanken je Spur 1,2,3 verringert werden. Die Anzahl der erfaßten Flanken je Spur 1,2,3 erhöht bei deren Auswertung die statistische Sicherheit des Meßwertes.

Die Auswertung der Spuren 1 und 2 mit nichtperiodischer Struktur ermöglicht die Bestimmung eines Wegsegmentes für jede der Spuren 1 und 2. Diese Wegsegmente sind bei einem kleinen Winkel α₁ bzw. α₂ der Striche der Spuren 1 und 2 bezüglich der Meßrichtung 5 auch bei großen Positionierbewegungen erfaßbar.

Durch die spiegelbildliche Ausrichtung der Striche innerhalb der Spuren 1 und 2 bzw. entgegengesetzten Richtungssinn R₁ und R₂ kann die Winkellage γ zwischen Meß- und Abtastrichtung über das Sensorsignal bestimmt werden und Justageabweichungen bei der Auswertung eliminiert werden.

Die Codierung der absoluten Ortsposition erfolgt dadurch, daß die Striche der Spuren 1 und 2 nach einem definierten System anordnet werden, indem der Abstand und/oder die Breite der Striche variiert wird. Sicherzustellen ist hierbei, daß das Strichmuster über beide Spuren 1 und 2 hinweg keine Wiederholungen besitzt und somit zu jedem vom Sensorarray 6 abgetasteten Muster eine genau definierte Absolutposition zuordenbar ist. Da zwei codierte Spuren 1 und 2 Anwendung finden besteht zum einen die Möglichkeit, die Codeinformation des gesamten Meßwegs auf beide Codespuren zu verteilen und zum anderen die vollständige Ortsinformation in jeder Codespur zu verschlüsseln. Im ersten Fall ist die vollständige Codeinformation beider Codespuren 1 und 2 erforderlich, um die Ortsposition zu bestimmen. Die Trennung der Codeinformation gestattet aber andererseits eine platzsparende Ortskodierung. Im zweiten Fall ist auch bei Ausfall der Codeinformation einer Codespur 1 oder 2 durch Verschmutzungen etc. die Ortsposition ermittelbar. Dies erlaubt die Gestaltung von Meßsystemen hoher Redundanz und damit hoher Störsicherheit.

Zur Fehlerkorrektur werden zwei Spuren 3 mit Strichen längs zur Meßrichtung 5 herangezogen. Dabei können sowohl die Abweichung von der vom Auswertesystem definierten Mitte (y'-Richtung) als auch der Abbildungsmaßstab (1/1', z'-Richtung) korrigiert werden.

Für die Justage des Meßsystems werden die beiden Spuren 3 mit Strichen längs zur Meßrichtung 5 benutzt, um das Sensorarray 6 an eine vom Auswertesystem definierte Mitte einzustellen (y'-Richtung) und den Abbildungsmaßstab (1/1') einzustellen (z'-Richtung). Außerdem ist es möglich, den Strichcodeträger 7 in den für Fehler relevanten Richtungen in allen Meßpositionen auszurichten, wobei die definierte Mittenposition (y-Richtung) unddieAbweichungdesAbbildungsmaßstabs (1/1', z-Richtung) durch Lageänderung des Strichcodeträgers 7 eingestellt werden kann. Durch den Vergleich der ermittelten Wegsegmente beider Spuren 1 und 2 mit nichtperiodischer Strichstruktur kann außerdem die Winkellage γ des Sensorarrays 6 bezüglich der Meßrichtung 5 ermittelt werden. Durch Nutzung der kompletten Spurinformationen aller Spuren 1,2,3 kann ein Nullpositionsabgleich durchgeführt werden (y'-Richtung). Bei der Justage kann damit das Meßsystem in allen Koordinatenachsen in der Größenordnung der jeweils erfaßbaren Genauigkeit eingestellt werden.

Bei der Ermittlung der Absolutposition werden außerdem Justage- und Führungsfehler durch Auswertung der zwei Spuren 3 mit Strichen parallel zur Meßrichtung 5 der Fehler der Abweichung von der vom Auswertesystem definierten Mittenposition (y'-Richtung) und des Abbildungsmaßstabs (1/1', z'-Richtung) sowie durch Auswertung der beiden Spuren 1 und 2 mit nichtperiodischer Strichstruktur die Winkellage γ des Sensorarrays 6 bezüglich der Meßrichtung 5 korrigiert.

Das Wegsegment wird aus der Strichfolge des Strichcodes der beiden Spuren 1 und 2 mit nichtperiodischer Strichstruktur bestimmt. Die Absolutposition ergibt sich aus dem Wegsegment unter Beachtung der Fehlerkorrektur.

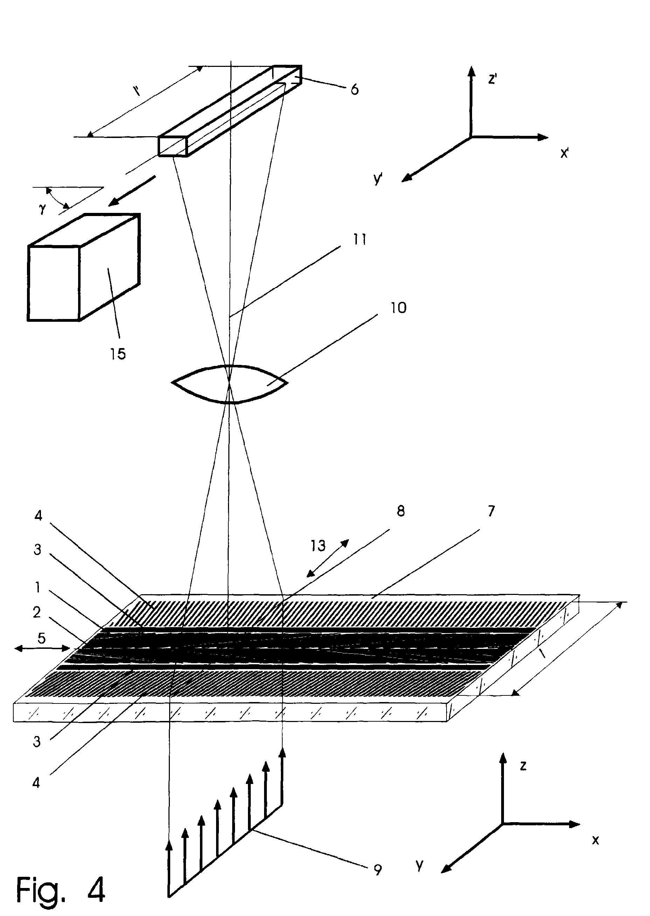

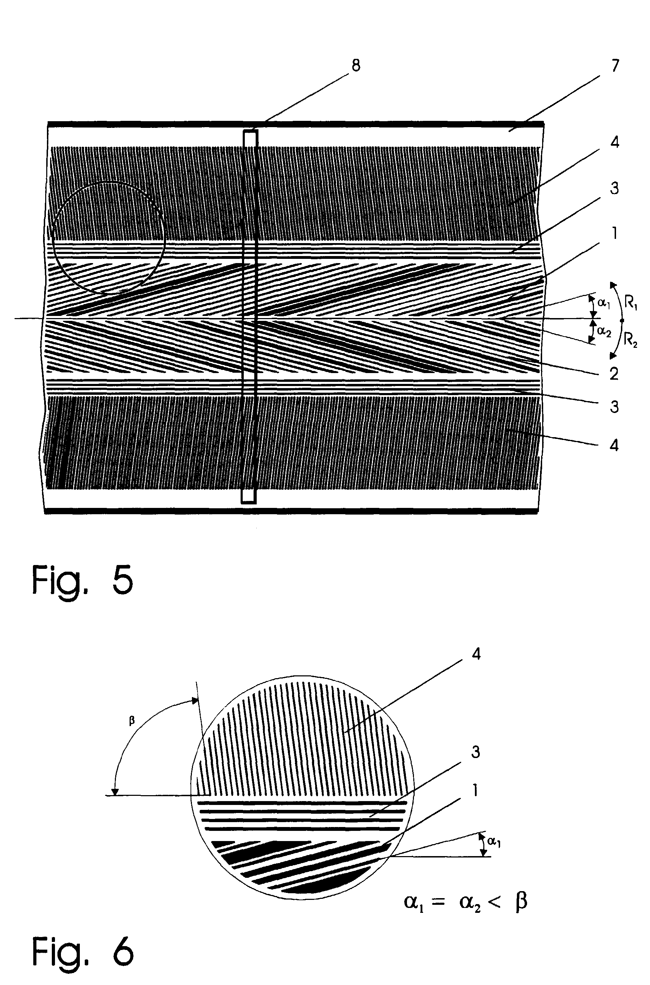

Figur 4 zeigt ein absolutes Längenmeßsystem, bei dem die in Figur 5 und Figur 6 dargestellte, mittels einer Lichtquelle 9 beleuchtete Strichstruktur 1,2,3,4 des Strichcodeträgers 7 über ein optisches System 10 abtastet wird. Gegenüber der in Figur 1 bis 3 beschriebenen Variante finden zusätzlich zwei spiegelbildlich angeordnete Spuren 4 mit periodischer Strichstruktur Anwendung, die jeweils die äußersten Spuren bilden. Die Striche dieser beiden Spuren 4 sind gekennzeichnet durch einen steilen Anstiegswinkel β bezüglich der Meßrichtung 5 bzw. einen flachen Anstiegswinkel bezüglich der Abtastrichtung 13 des Sensorarrays 6. In Abhängigkeit vom Einsatzfall sollte der Anstiegswinkel α₁ und α₂ der Spuren 1 und 2 zwischen 5° und 30° und der Anstiegswinkel β der Spuren 4 zwischen 70° und 87° betragen. Durch die unterschiedlich großen Anstiegswinkel α₁ und α₂ der Spuren 1 und 2 mit nichtperiodischer Strichstruktur bzw. β der Spuren 4 mit periodischer Strichstruktur ergeben sich bei gleicher Bewegungsgeschwindigkeit in Meßrichtung unterschiedliche Bildgeschwindigkeiten der Striche dieser Spuren in Abtastrichtung, so daß die Auflösung der Spuren 4 größer ist als die der Spuren 1 und 2. Hingegen ist die maximale Bewegungsgeschwindigkeit, bei der die Striche innerhalb der Spuren auswertbar sind (Verwischung des Spurbildes) der Spuren 1 und 2 höher als die der Spuren 4. Somit bestimmen die Spuren 4 die Auflösung und die Spuren 1 und 2 die Dynamik des Systems. Eine weitere Erhöhung der Dynamik ist durch eine mit dem Sensortakt des Sensorarrays synchronisierten Lichtsteuerung erreichbar.

Die Auswertung der Strichstruktur folgt den Grundsätzen nach dem ersten Ausführungsbeispiel von Figur 1 bis 3 mit dem Unterschied, daß mittels der zusätzlichen Spuren 4 mit periodischer Strichstruktur eine Meßwerterfassung mit höherer Auflösung erreicht wird. Bei der AbsolutpositionsbestimmungwirdüberdieAuswertungderbeidenSpuren 1 und 2 mit nichtperiodischer Strichstruktur jeweils ein von der Strichstruktur größendefiniertes Wegsegment als absolute Meßposition und über die beiden Spuren 4 mit periodischer Strichstruktur die Teilung innerhalb dieses Wegsegmentes ermittelt, wobei aufgrund der höheren Dynamik der Spuren 1 und 2 auch bei sehr großen Positioniergeschwindigkeiten das Wegsegment eindeutig erfaßbar ist, d. h. die Absolutposition ist stets bis zur systembedingten maximalen Verfahrgeschwindigkeit ermittelbar.

Da die Lage quer zur Meßrichtung (y-Richtung) und senkrecht zur Meßrichtung (z-Richtung bzw. Abbildungsmaßstab) nach Auswertung der Spuren 3 und die Winkellage γ nach Auswertung der Spuren 4 direkt über das Meßsignal erfaßt werden kann, können der Maßstab und die Abtasteinheit ohne zusätzliche Hilfsmittel in allen Justagerichtungen zueinander positioniert und im Meßprozeß verbleibende Justagefehler vollständig korrigiert werden.

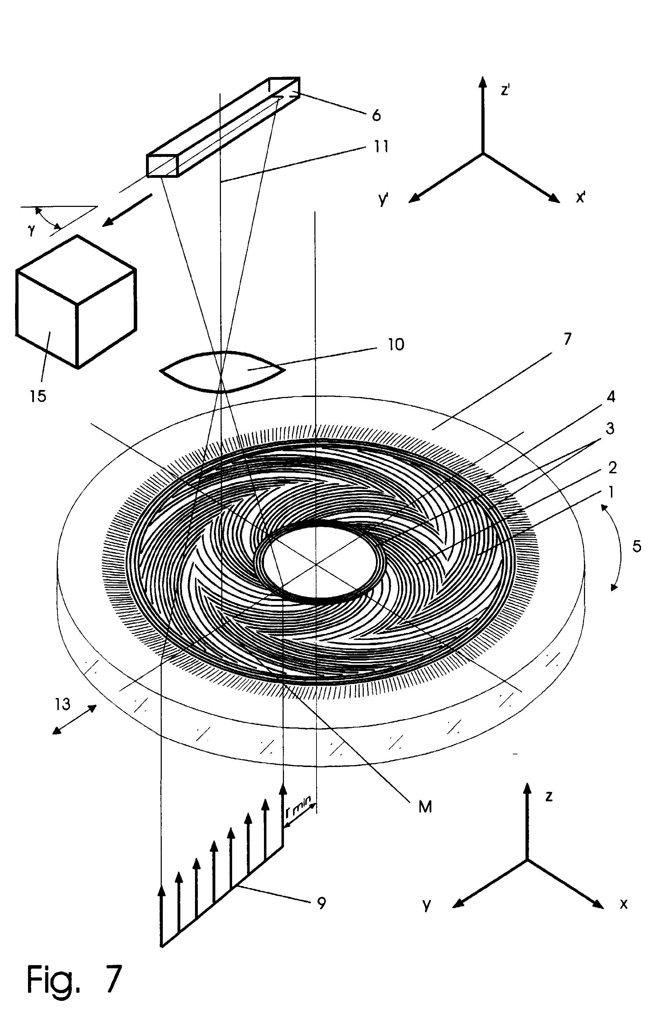

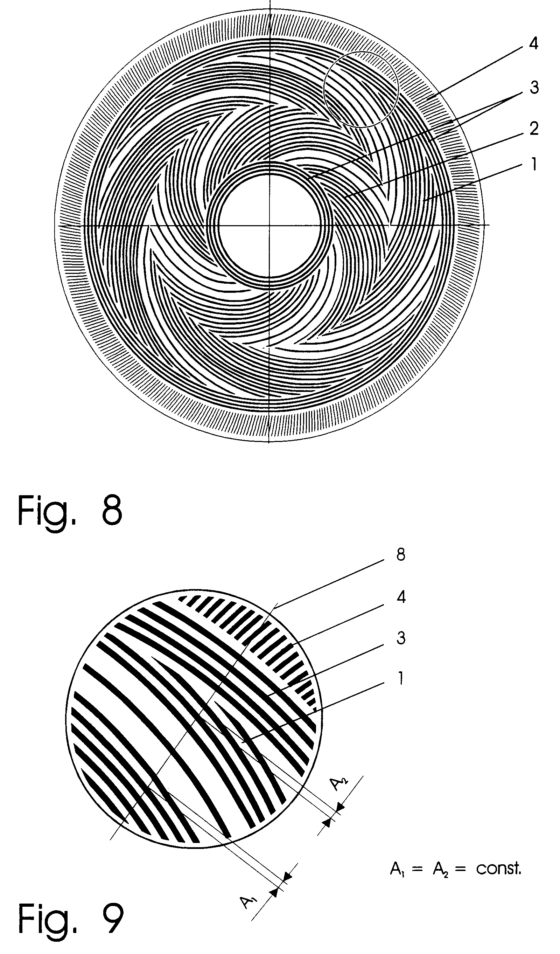

Als weiteres Ausführungsbeispiel zeigt Figur 7 ein absolutes Winkelmeßsystem, das optisch die in Figur 8 und Figur 9 dargestellten, mittels einer Lichtquelle 9 beleuchteten Spuren 1,2,3,4 des Strichcodeträgers 7 über ein optisches System 10 abtastet. Die Anordnung des Sensorarrays 6 erfolgt radial im rechten Winkel γ zur Meßrichtung 5. Die optische Achse 11 liegt senkrecht zum Strichcodeträger 7. Der Erfassungsbereich des Sensorarrays umspannt den Bereich zwischen rₘᵢₙ und rₘₐₓ.

Um die gleichen Eigenschaften der Strichstruktur wie in den in Figur 1 bis Figur 6 beschriebenen Varianten zu erreichen, werden bei der Anwendung als Winkelmeßsystem die Striche innerhalb der Spuren 1 und 2 mit nichtperiodischer Strichstruktur und der Spuren 4 mit periodischer Strichstruktur als Archimedische Spiralen und die Striche innerhalb der Spuren 3 mit Strichen längs zur Meßrichtung als konzentrische Kreise ausgebildet, wobei der Strukturmittelpunkt mit der Drehachse des Meßsystems übereinstimmt.

Aus dem Meßsignal ist die Lage in radialer Richtung (y-Richtung) und senkrecht zur Meßrichtung (z-Richtung bzw. Abbildungsmaßstab) nach Auswertung der Spuren 3 und die Winkellage γ nach Auswertung der Spuren 1 und 2 direkt über das Meßsignal erfaßbar. Damit können der Maßstab und die Abtasteinheit ohne zusätzliche Hilfsmittel in allen Justagerichtungen zueinander positioniert und im Meßprozeß verbleibende Justagefehler vollständig korrigiert werden. Insbesondere mit der Information über die Lage in radialer Richtung ist die bei Winkelmeßsystemen kritische Exzentrizitätsabweichung der Kodescheibe erfaß- und korrigierbar.

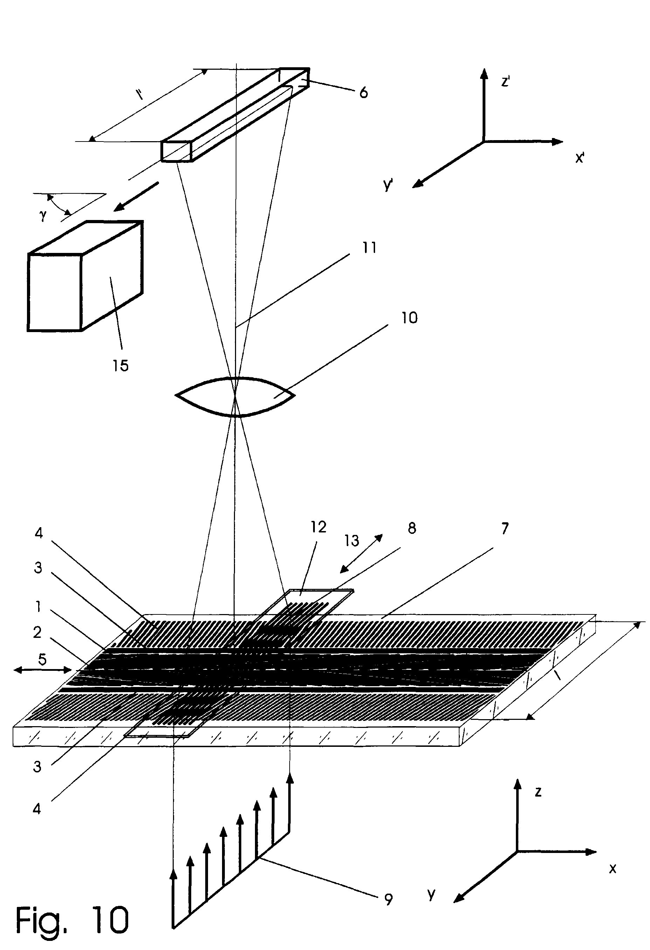

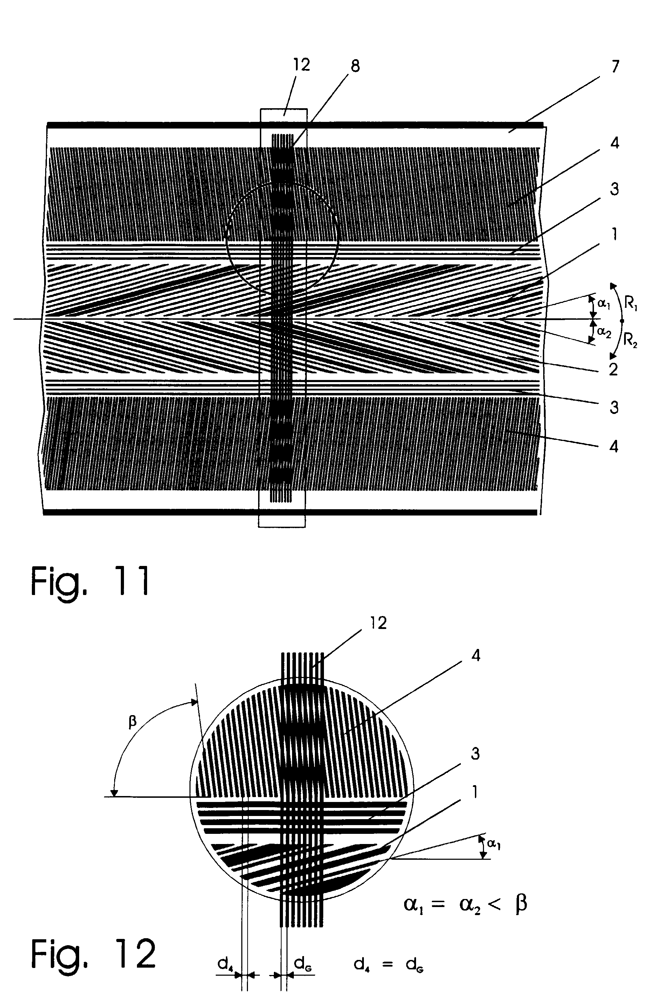

Die Figuren 10 bis 12 zeigen ein absolutes Längenmeßsystem, welches in Strukturaufbau und Auswertung mit den in den Figuren 4 bis 6 beschriebenen Meßsystem identisch ist, sich aber dadurch unterscheidet, daß zusätzlich ein Abtastgitter 12, welches parallel zur Abtastrichtung 13 im Erfassungsbereich des Sensorarrays 6 über bzw. unter dem Strichkodeträger 7 angeordnet ist und dessen Teilung identisch mit der Teilung der Spuren 4 mit periodischer Strichstruktur ist. Hierbei entsteht ein Moiré-Muster innerhalb der Spuren 4. Vorteilhaft lassen sich Sensorarrays 6 mit großen Sensorflächen nutzen, deren Sensorelementebreite quer zur Abtastrichtung nicht durch die Teilung der Spuren 4 mit periodischer Strichstruktur begrenzt wird und damit sowohl eine höhere Unempfindlichkeit gegenüber Verschmutzungen etc. als auch höhere Lichtausbeute besitzen.

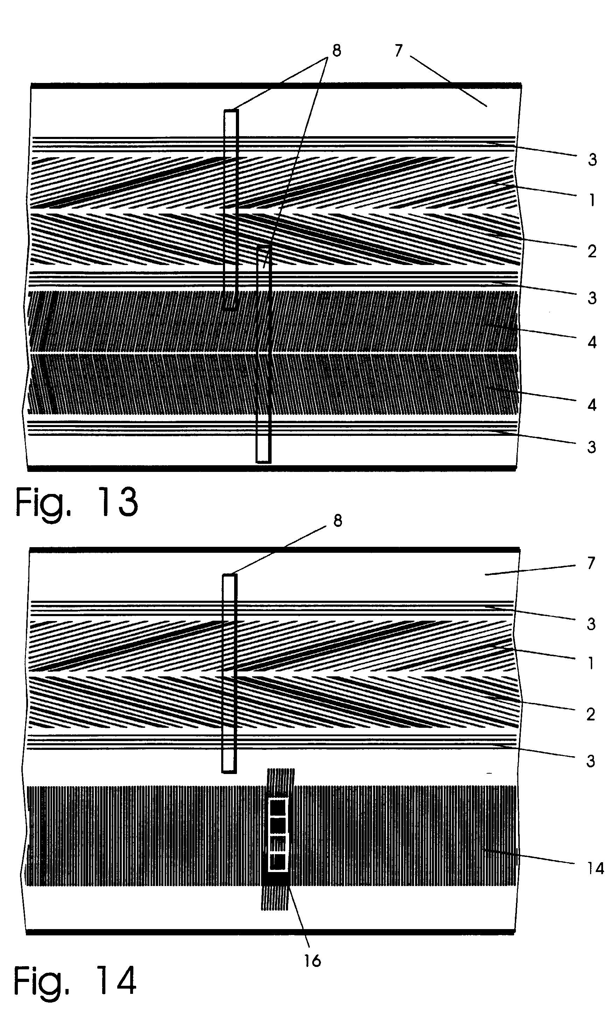

Figur 13 zeigt die Strichstruktur eines absoluten Längenmeßsystems, dessen Strichstruktur 1,2,3,4 durch zwei Sensorarrays 6 abgetastet wird. Die dargestellte Aufteilung in unterschiedliche Abtastbereiche gestattet eine parallele Abtastung getrennter Strukturbereiche: einen Strukturbereich mit zwei Spuren 1 und 2 mit nichtperiodischer Strichstruktur und zwei Spuren 3 mit in Meßrichtung liegenden Strichen, deren Auswertung die Bestimmung des absoluten Wegsegments gestattet, und einen weiteren Strukturbereich mit zwei Spuren 4 mit periodischer Strichstruktur und zwei Spuren 3 mit in Meßrichtung liegenden Strichen, deren Auswertung die Teilung innerhalb des Wegsegments bestimmt. Gegenüber den bisher beschriebenen Varianten lassen sich vorteilhaft Sensorarrays 6 mit niedrigerer Sensorelementeanzahl nutzen, mit deren Hilfe kleinere Zykluszeiten erreicht werden können.

Figur 14 zeigt eine weitere Ausgestaltungsform, bei der ein in Figur 1 bis 3 beschriebenes Absolutmeßsystem mit einem inkrementalen Meßsystem kombiniert wird. In dieser Form läßt sich einerseits ein herkömmliches inkrementales Meßsystems mit einer permanent zur Verfügung stehenden Referenzspur gestalten, andererseits ein Absolutmeßsystem, welches eine hohe Auflösung durch die zusätzliche Auswertung der Inkrementalspur erreicht.

Die erzielbaren Vorteile der erfindungsgemäß ausgestalteten Positionsmeßsysteme nach Figuren 1 bis 14 gegenüber anderen Längen- und Winkelmeßsystemen sind:
- Erfaßbarkeit der Absolutposition bis zur technisch maximalen Verfahrgeschwindigkeit,
- hohe Dynamik und Auflösung,
- Unterstützung der Justage des Abtastkopfes und des Maßstabs durch das Meßsignal ohne Notwendigkeit der Zuhilfenahme zusätzlicher Meßgeräte,
- Eliminierung von verbleibenden Justageabweichungen bei der Meßpositionsbestimung
- hohe Störsicherheit durch Redundanz der Codierung
- Erkennbarkeit von durch Lageabweichungen, Verschmutzungen und Störungen hervorgerufenen Fehlern.

### Aufstellung der verwendeten Bezugszeichen

- 1: 1.Spur mit nichtperiodischer Strichstruktur
- 2: 2.Spur mit nichtperiodischer Strichstruktur
- 3: Spur parallel zur Meßrichtung
- 4: Spur mit periodischer Strichstruktur
- 5: Meßrichtung
- M: Mittenposition des Erfassungsbereichs des Sensorarrays
- 6: Sensorelemente-Matrix bzw. Sensorarray
- 7: Strichcodeträger
- 8: Erfassungsbereich des Sensorarrays / Abtastrichtung
- 9: Lichtquelle
- 10: optisches System
- 11: optische Achse
- 12: Abtastgitter
- 13: Abtastrichtung
- 14: Inkrementalspur
- 15: Auswerteelektronik
- 16: Inkrementalabtasteinheit mit Moirégitter
- φ: Winkelwert
- r: Radius
- rₘᵢₙ: minimaler Radius des Erfassungsbereichs
- rₘₐₓ: maximaler Radius des Erfassungsbereichs
- R₁: Richtungssinn der 1. Spur mit periodischer Strichstruktur
- R₂: Richtungssinn der 2. Spur mit periodischer Strichstruktur
- α₁: Winkel zwischen Meßrichtung und Strichrichtung der 1. Spur mit nichtperiodischer Struktur
- α₂: Winkel zwischen Meßrichtung und Strichrichtung der 2. Spur mit nichtperiodischer Struktur
- β: Winkel zwischen Meßrichtung und Strichrichtung der 2. Spur mit periodischer Struktur
- γ: Winkel zwischen Meßrichtung und Erfassungsrichtung
- l: Länge des Erfassungsbereiches auf dem Strichcodeträger
- l': Länge des Erfassungsbereiches des Sensorarrays
- x: x-Koordinate des Strichcodeträgers (Meßrichtung)
- y: y-Koordinate des Strichcodeträgers (Erfassungsrichtung)
- z: z-Koordinate des Strichcodeträgers
- x': x-Koordinate des Sensorarrays
- y': y-Koordinate des Sensorarrays (Erfassungsrichtung)
- z': z-Koordinate des Sensorarrays
- d₄: Strichabstand benachbarter Striche der Spuren mit nichtperiodischer Strichstruktur in Meßrichtung
- d_{G}: Strichabstand benachbarter Striche des Abtastgitters
- S₀: Bezugspunkt einer schrägen Linie
- sₘ: vom Sensorarray gemessener Weg
- s: Wegstrecke
- K: Konstante

## Patentansprüche

1. Absolutes-Positionsmeßsystem zur Bestimmung der Lage zweier relativ zueinander beweglicher Objekte mit
- einem am ersten Objekt angeordneten Strichcodeträger (7), der in mindestens zwei in Meßrichtung (5) angeordneten Spuren (1, 2) jeweils mehrere zueinander parallel verlaufenden Striche trägt,
- und einer am zweiten Objekt angeordneten Abtasteinheit mit zumindest einer in Richtung des Erfassungsbereichs (8) angeordneten lineare Matrix von Sensorelementen, bei der bei der Abtastung des Strichcodeträgers (7) jedes Sensorelement einen mittleren Helligkeitswert zur Verfügung stellt und aus der Folge all dieser Werte ein Analogsignal gebildet wird, und mit
- einer Auswerteelektronik (15), die aus dem Signal der Sensorelemente-Matrix (6) die Lage der Sensorelemente-Matrix (6) bezüglich des Strichcodeträgers (7) ermittelt,
- wobei die Striche der Spuren (1, 2) eine Winkelneigung α₁ von 0°<α₁<90° bzw. α₂ von 0°<α₂<90° bezüglich der Meßrichtung (5) aufweisen,
- wobei der Erfassungsbereich (8) der Sensorelemente-Matrix (6) eine von der Meßrichtung (5) und der Winkelneigung (α₁, α₂) der Striche der Spuren (1, 2) abweichende Winkelneigung γ besitzt,
- wobei die aufeinanderfolgenden Striche der Spuren (1, 2) eine nichtperiodische Strichstruktur bilden und die Winkelneigungen (α₁, α₂) bezüglich der Meßrichtung (5) entgegengesetzten Richtungssinn R₁ und R₂ aufweisen.

2. Absolutes Positionsmeßsystem nach Anspruch 1, dadurch gekennzeichnet, daß die Striche der nichtperiodischen Spuren (1, 2) unterschiedliche Abstände und / oder unterschiedliche Breiten aufweisen.

3. Absolutes Positionsmeßsystem nach einem der Ansprüche 1 oder 2, dadurch gekennzeichnet, daß die Striche der Spuren (1, 2) mit nichtperiodischer Strichstruktur spiegelbildlich zur Meßrichtung (5) gleiche Winkelneigungen (α₁, α₂) aufweisen.

4. Absolutes Positionsmeßsystem nach einem der vorhergehenden Ansprüche 1 bis 3, dadurch gekennzeichnet, daß zumindest eine weitere Spur (3) mit zumindest einem parallel zur Meßrichtung (5) verlaufenden Strich auf dem Strichkodeträger (7) angeordnet ist.

5. Absolutes Positionsmeßsystem nach einem der Ansprüche 1 bis 4, dadurch gekennzeichnet, daß zumindest eine weitere Spur (4) in Meßrichtung (5) angeordnet ist, und daß diese Spur (4) zueinander parallel verlaufende Striche aufweist, die eine periodische Strichstruktur bilden, wobei die Striche dieser Spur (4) eine von der Winkelneigung des Sensorelemente-Matrix (6) abweichende Winkelneigung (β) von 0°< β<90° bezüglich der Meßrichtung (5) aufweisen.

6. Absolutes Positionsmeßsystem nach Anspruch 5, dadurch gekennzeichnet, daß die Striche der nichtperiodischen Spuren (1) und (2) einen kleineren Winkel α₁ bzw. α₂ mit der Meßrichtung (5) einschließen, als die Striche der periodischen Spur (4).

7. Absolutes Positionsmeßsystem nach Anspruch 6, dadurch gekennzeichnet, daß die Striche der periodischen Spur (4) einen kleineren Winkel mit dem Erfassungsbereich (8) der Sensorelemente-Matrix (6) einschließen, als die Striche der nichtperiodischen Spuren (1, 2).

8. Absolutes Positionsmeßsystem nach einem der Ansprüche 5 bis 7, dadurch gekennzeichnet, daß zwei Spuren (4) mit periodischer Strichstruktur spiegelbildlich angeordnet sind.

9. Absolutes Positionsmeßsystem nach einem der vorhergehenden Ansprüche 1 bis 8, dadurch gekennzeichnet, daß ein Abtastgitter (12) parallel zur Abtastrichtung (13) im Erfassungsbereich der Sensorelemente-Matrix (8) über bzw. unter dem Strichkodeträger (7) angeordnet ist, wobei dessen Strichabstand d_{G} identisch mit dem Strichabstand benachbarter Striche der Spur (4) mit nichtperiodischer Strichstruktur ist.

10. Absolutes Positionsmeßsystem nach einem der vorhergehenden Ansprüche 1 bis 9, dadurch gekennzeichnet, daß bei Anwendung optischer Sensoren die Lichtquelle (9) zeitsynchron mit der Ansteuerung der Sensorelemente-Matrix (6) nur einen Teil der Zykluszeit der Sensorelemente-Matrix (6) eingeschaltet ist.

11. Absolutes Positionsmeßsystem nach einem der vorhergehenden Ansprüche 1 bis 10, dadurch gekennzeichnet, daß die Sensorelemente-Matrix (6) als eindimensionales Sensorarray ausgebildet ist.

12. Absolutes Positionsmeßsystem nach einem der vorhergehenden Ansprüche 1 bis 11, dadurch gekennzeichnet, daß die Strichstruktur durch mehrere Sensorarrays (6) abgetastet wird.

13. Absolutes Positionsmeßsystem nach einem der vorhergehenden Ansprüche 1 bis 12, dadurch gekennzeichnet, daß eine Auswerteelektronik (15) aus dem Analogsignal der Sensorelemente-Matrix (6) ein Vektorfeld bildet, das Positionen der Durchschreitung des Helligkeitssignals an vorgegebenen Grenzen beinhaltet, das den Helligkeitsverlauf über der Sensorelemente-Matrix (6) unabhängig von der Teilungsschrittweite der Elemente der Sensorelemente-Matrix (6) beschreibt, wodurch die Bestimmungsgenauigkeit der Lage der Sensorelemente-Matrix (6) zu den nichtperiodischen Spuren (1, 2) und/oder zu der periodischen Spur (4) höher als die Teilungsschrittweite der Sensorelemente-Matrix (6) ist.

14. Absolutes Positionsmeßsystem nach einem der vorhergehenden Ansprüche 1 bis 13, dadurch gekennzeichnet, daß zusätzlich ein inkrementales Meßsystem eine Inkrementalspur (14) oder eine Spur (4) mit periodischer Strichstruktur abtastet.
